(19) Europäisches Patentamt
European Patent Office
Office européen des brevets

(11) **EP 3 098 769 A1**

(12) **EUROPEAN PATENT APPLICATION**

(43) Date of publication:
**30.11.2016 Bulletin 2016/48**

(51) Int Cl.:
***G06Q 30/02*** *(2012.01)*

(21) Application number: **15305800.3**

(22) Date of filing: **27.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **NEUMANN, Christoph**
**35576 Cesson-Sévigné Cedex (FR)**
• **STRAUB, Gilles**
**35576 Cesson-Sévigné Cedex (FR)**
• **LE MERRER, Erwan**
**35576 Cesson-Sévigné Cedex (FR)**

(74) Representative: **Perrot, Sébastien**
**TECHNICOLOR**
**1-5, rue Jeanne d'Arc**
**92130 Issy-les-Moulineaux (FR)**

(54) **METHOD OF RATING POINTS OF INTEREST AND CORRESPONDING APPARATUS**

(57) Rating of Points Of Interest (POIs) for a recommender system, based on user movement behavior. In numerous situations, a user cannot or does not wish to explicitly enter a rating for a POI. The present principles allow to determine implicit ratings for POIs. A first distribution function of movement behavior of a set of users is determined for a POI. A second distribution function of explicit ratings for the POI is established. Both distribution functions are fitted, to obtain a fitting function and associated fitting function parameters for computing an individual implicit POI rating for a user based on the user's movement behavior related to said Point of Interest.

Init **40**

Store movement behavior of a plurality of users for a given POI **41**

Establish a distribution function of movement behavior of the plurality of users at the POI, based on stored movement behavior **42**

Establish a distribution function of ratings of the given POI from a plurality of users from data of explicit ratings **43**

Fit both distribution functions **44**

Use result of fitting operation to compute implicit user rating for a given user for the a given POI the user visited **45**

Done **46**

**Fig. 4**

EP 3 098 769 A1

**Description**

**1. Technical field.**

The present disclosure generally relates to recommender systems, and in particular to systems for recommending points of interest (POIs) to a user.

**2. Technical background.**

Recommender systems such as TripAdvisor and Yellow Pages enable users to submit ratings for points of interest such as tourist attractions, hotels, bars, restaurants, shops etc. A user rating is generally a grade, for example one to five stars, or a digit between one and ten, that is attributed by a user. The recommender systems collect these user ratings, and build recommendations for users for example based on collaborative filtering (CF). These recommendations provide helpful guidance for planning a trip or when searching for a restaurant. The attribution of grades require interaction with the user. Often, users are not willing to enter a recommendation each time they have visited a hotel or restaurant. For safety reasons, it may also not be advisable for a user to enter a recommendation, e.g. when a user is driving a car. There is thus a need to provide a way to obtain user ratings without relying on user interaction. It would therefore be desirable to have a recommender system, method and device that do not have the disadvantages of the prior techniques.

**3. Summary.**

The present disclosure aims at alleviating some of the inconveniences of prior art.

To this end, the present principles comprise a method of rating a Point of Interest. The method comprises establishing a first distribution function of movement behavior of a set of users at the Point of Interest from data of movement behavior at the Point of Interest as characterized by a movement characterizing function; establishing a second distribution function of explicit user ratings for the Point of Interest, from data of explicit user ratings for the Point of Interest; and fitting (44) the first distribution function and the second distribution function to obtain a fitting function with a fitting function type and associated fitting function parameters, for computing an individual user-implicit Point of Interest rating for a user and for the Point of Interest based on the user's movement behavior related to the Point of Interest.

According to a variant embodiment of the method of rating a Point of Interest, the fitting function parameters are linear transformation variables of movement characterizing parameters of the movement characterizing function, a first linear transformation variable representing a slope of the linear transformation, and a second transformation variable representing an y-intercept of the linear transformation.

According to a variant embodiment of the method of rating a Point of Interest the fitting function is of a type that is one of a linear function or a quadratic function.

According to a variant embodiment of the method of rating a Point of Interest, the fitting further comprises a computing of a Least Minimum Squares between the first distribution function and the second distribution function.

According to a variant embodiment of the method of rating a Point of Interest, the movement characterizing function is a movement characterizing parameter x that is at least one of a stopping frequency of the user stopping at the Point of Interest; a stopping duration of the user stopping at the Point of Interest; a standard deviation of stopping time of the user stopping at the Point of Interest; a distance of deviation of the Point of Interest from a shortest trajectory for the user to travel from one point to another.

According to a variant embodiment of the method of rating a Point of Interest further comprises choosing the movement characterizing parameter x as a function of a type of the Point of Interest.

The present disclosure also relates to a device for rating of a Point of Interest, the device comprising a processor configured to establish a first distribution function of movement behavior of a set of users at the Point of Interest from data of movement behavior at the Point of Interest as characterized by a movement characterizing function; the processor being further configured to establish a second distribution function of explicit user ratings for the Point of Interest, from data of explicit user ratings for the Point of Interest; and the processor being further configured to fit the first distribution function and the second distribution function to obtain a fitting function with a fitting function type and associated fitting function parameters, for computing an individual user-implicit Point of Interest rating for a user and for the Point of Interest based on the user's movement behavior related to the Point of Interest.

According to a variant embodiment of the device, the processor is further configured to fit the first distribution function and the second distribution function according to a fitting function that is of a type that is one of a linear function or a quadratic function.

According to a variant embodiment of the device, the processor is further configured to compute of a Least Minimum Squares between the first distribution function and the second distribution function.

According to a variant embodiment of the device, the device is a server.

**4. List of figures.**

Advantages of the present principles will appear through the description of particular, non-restricting embodiments of the disclosure. In order to describe the manner in which the advantages of the present principles can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure.

The exemplary embodiments will be described with reference to the following figures:

**Figures 1a and 1b** are example probability distribution functions of stopping frequencies for two different Points of Interest.

**Figure 2** illustrates an example distribution function of explicit user ratings for a first Point of Interest (source: TripAdvisor).

**Figure 3** illustrates an example distribution function of explicit user ratings for a second Point of Interest (source: TripAdvisor).

**Figure 4** is a flow chart of an example embodiment of a method of rating Points of Interest according to an embodiment of the present principles.

**Figure 5** is an example hardware embodiment of a device suitable for implementing a method of rating Points of Interest according to an embodiment of the present principles.

**5. Detailed description.**

Prior technique recommender systems may have weaknesses among which:

- In some contexts, users are not able to enter explicit ratings, for example, when a user is driving a car. Some countries are pushing legislation to prohibit "invasive" interactions with the user in her car, for security purposes. Stopping behavior can be monitored instead to extract data for POI rating purposes but it is difficult to extract a rating from the stopping behavior alone, e.g. think of a car driver stopping at a POI that happens to be near a traffic light.
- It is not possible to perform recommendations for users that did not enter a single rating, i.e. for users that are not yet known to the recommender system.

Thus, with prior technique recommender systems, it is difficult to obtain explicit user ratings and it is difficult to perform recommendations for users that are unknown to the recommender system.

The present principles therefore include obtaining ratings without user interaction or user implicit ratings and directed at least in part to solving at least some disadvantages of prior techniques.

In one embodiment of the present principles to obtain ratings without user interaction according to the present principles, a POI-related position of a set of users is tracked over time, e.g. the movement behavior of a set of users near POIs is tracked. The distribution of movement behavior for the set of users is then fitted to a distribution of explicit ratings for the POIs that are both in the explicit ratings and in the movement behavior. This fitting resolves to a function and function parameters that enables the translation of, for an individual user, individual user movement behavior near a POI to a rating, further referred to as 'implicit rating', the user would probably have given for the POI, would he have had the occasion to enter an explicit rating for the POI. Using this function, movement behavior of an individual user is thus used to determine an implicit rating for POIs a user visited or passed by. The implicit rating corresponds to a rating the user would have given to the POIs visited or passed by if he/she would have been able to give an explicit rating. In one embodiment of the present principles, the position-time tracking of a user is done for example using techniques such as GPS (Global Positioning System) location tracking of a user by a mobile device such as smartphones, tablet PCs, or vehicle-mounted devices such as a car entertainment and information system. Movement tracking can be based on the use of other location techniques such as Bluetooth, Wifi, high-precision clocks, gyroscopes and accelerometers or ASPN (All Source Positioning and Navigation, that allows to do position tracking based on a plurality of different sources such as television, radio, cell towers, satellite etc.), cell ID, etc..

First, based on movement behavior collected from a set of users, a distribution function of a movement characterizing function is built. This distribution function describes the movement behavior of the set of users at a given POI. Then, a distribution function of explicit user ratings for a given POI is built, and both distribution functions are fitted. The fitting returns a set of function parameters for a function type. For example if the function type is linear, its form is f(x)=ax+b, and the parameters are (a,b). If the function type is quadratic, its form is f(x)=ax$^2$+bc+c and its parameters are (a,b,c). In yet another example, the function type is exponential, its form is f(x)=a*e$^{-bx}$ and ts parameters are (a,b). The function and its parameters enable the translation of a movement behavior of a given user at a given POI into an implicit rating of that user for the given POI.

According to a variant embodiment of a method according to the present principles, the method is applied to a movement characterizing function that comprises a set of different movement characterizing parameters, and the fitting is calculated for each of these movement characterizing parameters. In order to determine the set of parameters of the fitting and the movement characterizing parameter that best translates a movement behavior to an actual rating for a given POI, the errors introduced by the fitting for each movement characterizing parameter are calculated. The movement characterizing parameter that minimizes the fitting error is retained for the movement characterizing function. It is this movement characterizing function that is then used for position-time tracking of an individual user.

According to a further variant embodiment, the movement characterizing function retained is a combination of a set (e.g., two or more) of different movement characterizing parameters giving the best results i.e. the lowest error introduced by the fitting.

Inputs to the method according to various embodiments of the present principles are position and timestamp information, e.g. in the form of a tuple <coordinates, time>, and POI coordinates.

For each POI, computing is done of a first probability distribution function $f_{MOV}^{POI}(f_m)$ where $f_m$ is a movement characterizing function that characterizes the movement behavior of users at the POI. The movement characterizing function $f_m$ is for example a frequency of stops, or a stop duration, wherein a stop is a real stop or a deceleration, or a combination of stopping frequency and stopping duration.

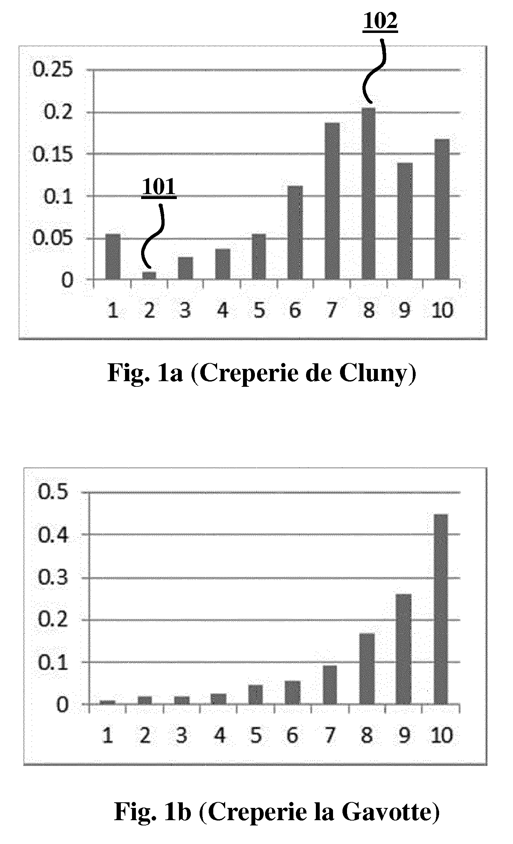

**Figures 1a and 1b** are examples of first probability distribution functions of stopping frequencies for two different POIs. The figures graphically represent a probability that users stop at a given POI. Figure 1 a is the stopping frequency - probability graph for a first POI, while Figure 1b is the stopping frequency - probability graph for a second POI. The X-axis represents the stopping frequency while the Y-axis represents the stopping probability. Referring to Figure 1a, one can observe (reference 102) that there is a 20% probability that a user stops with a frequency of 8 times within a given time period at a given POI, while one can observe (reference 101) that there is a probability of about 1% that a user stops only 2 times within the same given time period at the same POI.

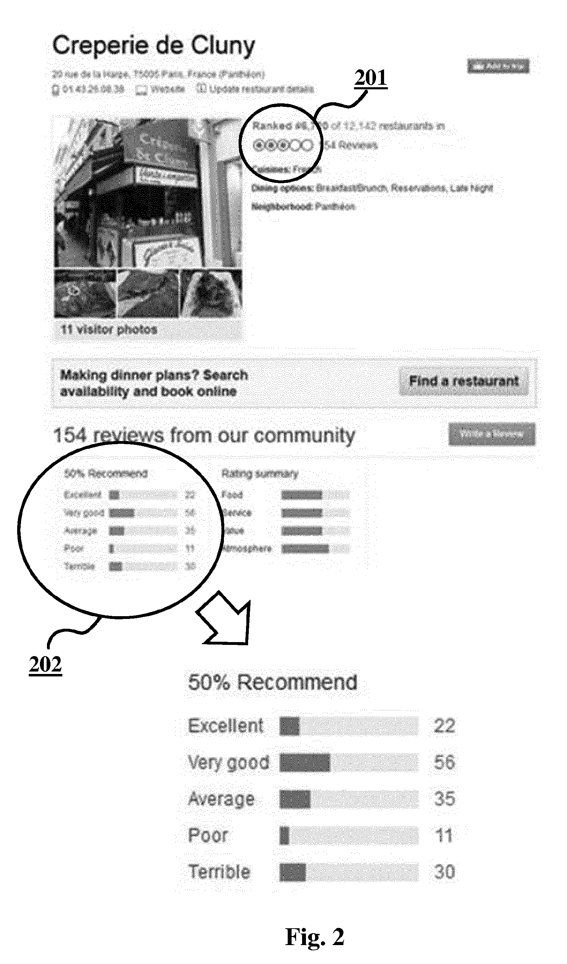

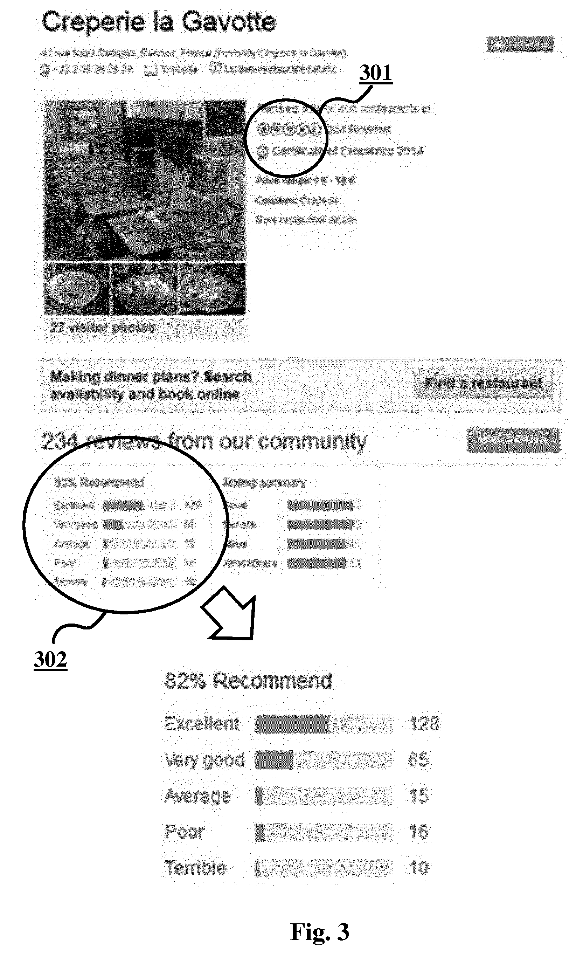

**Figures 2** and **3** are examples of explicit user ratings 201, 301 respectively for the POIs of figure 1 a and figure 1b (source: TripAdvisor). A second probability distribution function, $f_{RATING}^{POI}(r)$, is obtained from a set of explicit user ratings for a POI. The parameter $r$ is a rating between 1 and 5. In these figures, the distribution graphs 202, 302 respectively are zoomed out ("50% recommend" and "82% recommend", respectively). There are five ratings: 'terrible', 'poor', 'average', 'very good' and 'excellent', which correspond for example to a rating from 1 ('terrible') to 5 ('excellent'), respectively.

Now that the first and the second probability distribution functions for a given POI are obtained, i.e. $f_{MOV}^{POI}(f_m)$ (user movement behavior) and $f_{RATING}^{POI}(r)$ (explicit user rating), these distribution functions are fitted. For example one can conclude from a comparison of figures 1a and 2, that the stopping frequency of 8 seems to correspond to a rating of 'very good', i.e. to a rating note of 4, and that a stopping frequency of 2 seems to correspond to a rating of 'poor', i.e. to a rating note of 1. This fitting of both distribution functions is formalized according to the following.

In the following, for reasons of readability, the movement characterizing function $f_m$ is represented as a single movement characterizing parameter x, i.e. $f_m = x$. For more complex movement characterizing functions, $x$ can be replaced by $f_m$ in the following formulas.

First, the input parameters (*x and r*) are scaled (or 'normalized') to bring them to a same range (e.g. a range from 0 to 1, commonly noted as an interval [0,1]) according to equation one (1) and equation two (2), which follow:

$$x' = \frac{x - x_{min}^{POI}}{x_{max}^{POI} - x_{min}^{POI}} \qquad \textbf{(1)}$$

$$r' = \frac{r - r_{min}^{POI}}{r_{max}^{POI} - r_{min}^{POI}} \qquad \textbf{(2)}$$

where the scaled parameters are noted as x' ("x prime") and *r' ("r prime")*.

The corresponding descaling functions (*df*) are described according to equations three (3) and four (4), which follow:

$$df_x(x') = x'\left(x_{max}^{POI} - x_{min}^{POI}\right) + x_{min}^{POI} = x \tag{3}$$

and respectively

$$df_r(r') = r'\left(r_{max}^{POI} - r_{min}^{POI}\right) + r_{min}^{POI} = r \tag{4}$$

Both functions $f_{MOV}^{POI}(x)$ and $f_{RATING}^{POI}(r)$, being probability distribution functions, resolve according to equations five (5) and six (6), which follow:

$$\sum_{-\infty}^{\infty} f_{MOV}^{POI}(df_x(x')) = 0 \tag{5}$$

and

$$\sum_{-\infty}^{\infty} f_{RATING}^{POI}(df_r(r')) = 0 \tag{6}$$

Therefore, the y values do not need to be normalized nor scaled.
The fitting of both distributions is defined as a linear programming problem that can be solved using optimization techniques. The linear programming problem is defined according to equations seven (7) and eight (8) which follow:

$$minimize: \quad \sum_{i=1}^{n}(f_{MOV}^{POI}\left(df_x(x'_i)\right) - f_{RATING}^{POI}(df_r(a^{POI}x'_i + b^{POI})))^2 \tag{7}$$

$$subject\ to: \quad \forall\ i;\ 0 < df_r(a^{POI}x'_i + b^{POI}) \leq 1 \tag{8}$$

Where $df_r(a^{POI}x'_i + b^{POI})$ is in the interval [0,1].
This linear problem is solved using classical optimization techniques, which provide ($a^{POI},b^{POI}$). In the above problem formulation $a^{POI}$ and $b^{POI}$ are linear transformation variables of the scaled movement characterizing parameters x. $a^{POI}$ is the slope of this transformation, and $a^{POI}$ is the y-intercept. An implicit rating r can now be computed for a given POI according to equation nine (9), which follows:

$$r_{user}^{POI} = df_r(a^{POI}\ \frac{x_{user}^{POI} - x_{min}^{POI}}{x_{max}^{POI} - x_{min}^{POI}} + b^{POI}) \tag{9}$$

Wherein $x_{user}^{POI}$ is for example a frequency of visit (x) for a user *(user)* and a given POI *(POI)*, and $x_{min}^{POI}$ is the minimum value for parameter x (e.g. 0) and $x_{max}^{POI}$ is the maximum value for parameter x (e.g. 1).
In the above example embodiment, the movement characterizing parameter *x* was discretized in *n* values (e.g. n=5). However, *x* can have any continuous value. With continuous values the optimization problem formulates according to equations ten (10) and eleven (11), which follow:

$$minimize: \quad \int_0^1 (f_{MOV}^{POI}(df_x(x')) - f_{RATING}^{POI}(df_r(a^{POI}x' + b^{POI})))^2 \tag{10}$$

$$subject\ to: \quad 0 < df_r(a^{POI}x' + b^{POI}) \leq 1 \tag{11}$$

According to a variant embodiment, that is particular suited to non-linear relationships between *x* and r, a non-linear regression method is used. In this particular variant, equations (5) and (6) are replaced by a non-linear optimization problem formulation according to equations twelve (12) and thirteen (13), which follow:

$$minimize: \quad g(f_{MOV}^{POI}(df_x(x')), f_{RATING}^{POI}(df_r(r'))) \quad \textbf{(12)}$$

$$subject \ to: \quad 0 < h(df_r(x')) \leq 1 \quad \textbf{(13)}$$

As mentioned previously, the described method can be applied to a set of different movement characterizing parameters (e.g. stopping frequency, stopping duration, distance of deviation of a POI from an optimal trajectory). Some types of POI might be better modeled, i.e. resulting in lesser fitting errors, with particular types of movement characterizing parameters. For example, for a POI that is a bakery shop, persons stop regularly to buy their bread. For a POI that is a tourist attraction, persons will stop only once.

Therefore, according to a variant embodiment of the present principles, instead of, for a given POI, calculating the fitting and its fitting error for all possible movement characterizing parameters and retaining only the movement characterizing parameter that minimizes the fitting error (brute force calculation), POIs are classified according to their type, and a movement characterizing parameter is chosen according to the POI type so that the fitting is calculated only for this movement characterizing parameter, which allows to reduce the calculating time and effort.

Examples of a movement characterizing parameter x are:

- x is a stopping frequency when the POI is a restaurant, a bakery shop, a supermarket, e.g. for a 'food' type POI;
- x is a standard deviation of inter stopping time. E.g. a regular visiting pattern, and thus small standard deviation, may indicate a good implicit rating for POI types such as a hairdresser, clothes shop, e.g. for a 'personal care' type POI;
- x is a stopping duration if the POI type is a tourist attraction or a clothing store as it is unlikely that a person will visit a same tourist attraction or clothing store frequently and measuring x as a stopping frequency would give incorrect results, e.g. for a 'tourist attraction' type POI;
- x is a distance of deviation of a POI from an optimal trajectory. E.g. A person who deviates significantly from an optimal trajectory between work and home, might have a particular reason to do so, because of the POIs that are at this significant distance.

According to a variant embodiment of the present principles, any of the above types of parameters *x* can be used in any combination in order to render the computed rating *r* more significant. For example, combining the stopping duration and the stopping frequency for places like bars and restaurants could render a more precise model than using only the stopping frequency. The parameter *x* is then a vector and the resulting rating *r* is then a polynomial of vector attributes.

According to a variant embodiment of the present principles, instead of fitting the distribution functions of ratings and movement behavior for a single POI, the aggregated distribution functions of multiple POIs are fitted. An aggregated distribution function is the mean distribution function of all distribution functions of the considered POIs.

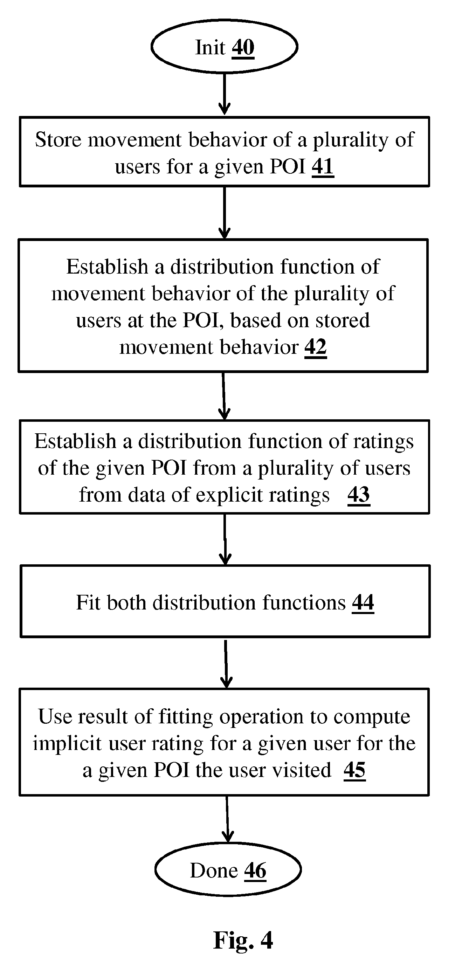

**Figure 4** is a flow chart of an example embodiment of a method according to the present principles. In a first step 40, any variables and memory space is initialized that are used by the method. In a step 41, movement behavior of a plurality of users is stored per POI the plurality of users visited, where the plurality of users stopped, slowed down or passed by. This step can be done 'offline', i.e. the present principles can apply to movement behavior data for a plurality of users that is stored beforehand. In a step 42, a distribution function $f_{MOV}^{POI}(f_m)$ of movement behavior for the plurality of users at a given POI is established, based on the movement behavior stored. In a step 43, a distribution function $f_{RATING}^{POI}(r)$ of explicit ratings of the given POI from a plurality of users is established from data of explicit ratings. These explicit rating data is for example in a data base accessible to the recommender system implementing the method. Then, in a step 43, both distribution functions (of movement behavior and of explicit ratings) are fitted, for example using equations seven (7) and eight (8), or according to equations twelve (12) and thirteen (13). Finally, the result of the fitting operation can be used to compute implicit ratings for a given user for a given POI the given user visited, where the given user stopped, slowed down or passed by, for example using equation nine (9).

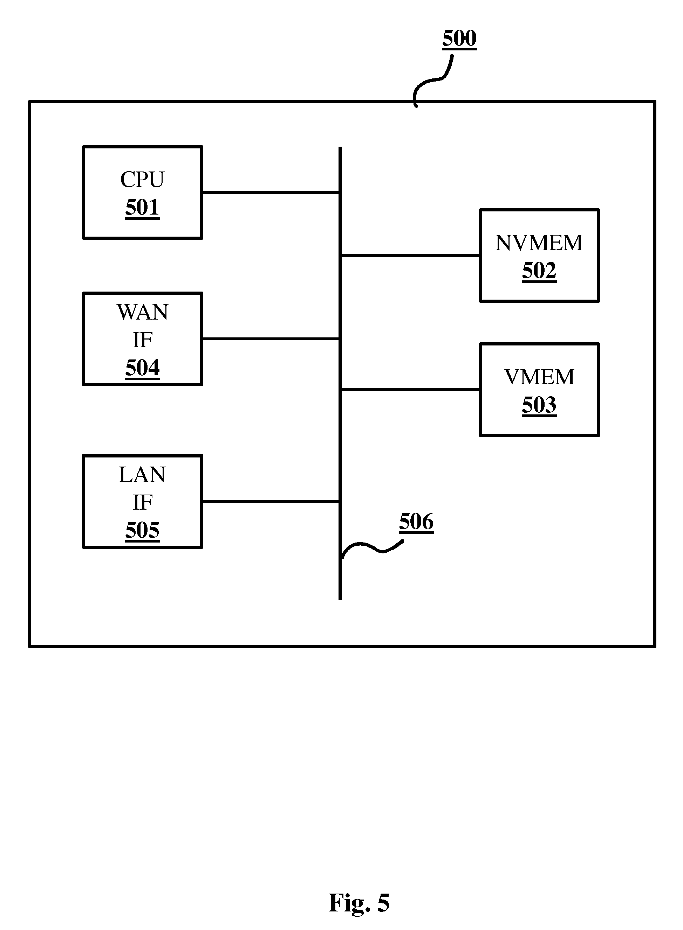

**Figure 5** is a high level block diagram of a device 500 suitable for implementing a method according to the present principles. The device comprises a CPU or processor 501, a Wide Area Network interface 504, a Local Area Network interface 505, a Non-Volatile memory 502, a volatile memory 503, all of which are interconnected by a communication bus 506. The non-volatile memory comprises for example program instructions that implement a method according to the present principles. Upon startup of the device 500, these program instructions are copied into volatile memory 503 and executed by processor 501. Network interface WAN 504 is for example used for connection of the device to the Internet. Network interface LAN 505 is for example used to connect the device to a local area network. Optionally, the device comprises display output means and a keyboard input means.

Some elements in the drawings may not be used or not be necessary in all embodiments. Some operations may be executed in parallel. Other variant embodiments than illustrated and/or described are possible.

The present principles can be applied to POIs in an indoor environment, in an outdoor environment, or both. An example of an indoor environment is a shopping mall, a supermarket or a shop. Applicable movement behavior is then the deplacement of a person inside the shopping mall (from shop to shop), inside the supermarket or shop (from shelf to shelf) or from product to product. Example POIs are then the shops in the shopping mall, the shelf in the shop. Example of an outdoor environment is a street, a neigboorhood, a town, a city, etc. Example POIS are then the buildings in the street, the street itself, the neighborhood, the town and the city.

A method according to the present principles can be implemented in a server device, such as a server in a cloud computing environment, a network server, a services access gateway, but also as a system comprising a set of devices that may comprise user devices.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

## Claims

1. A method of rating a Point of Interest, **characterized in that** said method comprises:

   establishing (42) a first distribution function of movement behavior of a set of users at said Point of Interest from data of movement behavior at said Point of Interest as **characterized by** a movement characterizing function;
   establishing (43) a second distribution function of explicit user ratings for said Point of Interest, from data of explicit user ratings for said Point of Interest; and
   fitting (44) said first distribution function and said second distribution function to obtain a fitting function with a fitting function type and associated fitting function parameters, for computing (45) an individual user-implicit Point of Interest rating for a user and for said Point of Interest based on the user's movement behavior related to said Point of Interest.

2. The method according to claim 1, wherein said fitting function parameters are linear transformation variables of movement characterizing parameters of the movement characterizing function, a first linear transformation variable representing a slope of said linear transformation, and a second transformation variable representing an y-intercept of said linear transformation.

3. The method according to claim 1 or 2, wherein said fitting function is of a type that is one of:

   a linear function; or

a quadratic function.

4. The method according to any of claims 1 to 3, wherein said fitting further comprises a computing of a Least Minimum Squares between said first distribution function and said second distribution function.

5. The method according to any of claims 1 to 4, wherein the movement characterizing function is a movement characterizing parameter x that is at least one of:

a stopping frequency of said user stopping at said Point of Interest;
a stopping duration of said user stopping at said Point of Interest;
a standard deviation of stopping time of said user stopping at said Point of Interest;
a distance of deviation of said Point of Interest from a shortest trajectory for the user to travel from one point to another.

6. The method according to claim 5, wherein the method further comprises choosing said movement characterizing parameter x as a function of a type of said Point of Interest.

7. A device for rating of a Point of Interest, **characterized in that** said device comprises:

a processor (501) configured to establish a first distribution function of movement behavior of a set of users at said Point of Interest from data of movement behavior at said Point of Interest as **characterized by** a movement characterizing function;
said processor being further configured to establish a second distribution function of explicit user ratings for said Point of Interest, from data of explicit user ratings for said Point of Interest; and
said processor being further configured to fit said first distribution function and said second distribution function to obtain a fitting function with a fitting function type and associated fitting function parameters, for computing an individual user-implicit Point of Interest rating for a user and for said Point of Interest based on the user's movement behavior related to said Point of Interest.

8. The device according to claim 7, wherein said processor is further configured to fit said first distribution function and said second distribution function according to a fitting function that is of a type that is one of:

a linear function; or
a quadratic function.

9. The device according to claim 7 or 8, wherein said processor is further configured to compute of a Least Minimum Squares between said first distribution function and said second distribution function.

10. The device according to any of claims 7 to 9, wherein said device is a server.

Fig. 1a (Creperie de Cluny)

Fig. 1b (Creperie la Gavotte)

# Creperie de Cluny

20 rue de la Harpe, 75005 Paris, France (Panthéon)
01.43.26.08.38    Website    Update restaurant details

Ranked #6,100 of 12,142 restaurants in

154 Reviews

Cuisines: French

Dining options: Breakfast/Brunch, Reservations, Late Night

Neighborhood: Panthéon

11 visitor photos

**201**

**Making dinner plans? Search availability and book online**    Find a restaurant

## 154 reviews from our community

Write a Review

50% Recommend

Excellent ▓ 22
Very good ▓▓ 56
Average ▓ 35
Poor ▏ 11
Terrible ▓ 30

Rating summary
Food ▓▓▓
Service ▓▓▓
Value ▓▓▓
Atmosphere ▓▓▓

**202**

## 50% Recommend

Excellent ▓ 22
Very good ▓▓ 56
Average ▓ 35
Poor ▌ 11
Terrible ▓ 30

## Fig. 2

# Creperie la Gavotte

41 rue Saint Georges, Rennes, France (Formerly Creperie la Gavotte)

☎ +33 2 99 36 29 36   💻 Website   ⓘ Update restaurant details

**301**

Ranked ... of 408 restaurants in ...

⊙⊙⊙⊙⊙ 234 Reviews

ⓒ Certificate of Excellence 2014

Price range: 0 € - 19 €

Cuisines: Creperie

More restaurant details

27 visitor photos

**Making dinner plans? Search availability and book online**

**Find a restaurant**

## 234 reviews from our community

**302**

82% Recommend

| | | |
|---|---|---|
| Excellent | ▓▓▓▓ | 128 |
| Very good | ▓▓ | 65 |
| Average | ▌ | 15 |
| Poor | ▌ | 16 |
| Terrible | ▌ | 10 |

Rating summary

Food

Service

Value

Atmosphere

## 82% Recommend

| | | |
|---|---|---|
| Excellent | ▓▓▓▓▓ | 128 |
| Very good | ▓▓ | 65 |
| Average | ▌ | 15 |
| Poor | ▌ | 16 |
| Terrible | ▌ | 10 |

**Fig. 3**

Init **40**

Store movement behavior of a plurality of users for a given POI **41**

Establish a distribution function of movement behavior of the plurality of users at the POI, based on stored movement behavior **42**

Establish a distribution function of ratings of the given POI from a plurality of users from data of explicit ratings **43**

Fit both distribution functions **44**

Use result of fitting operation to compute implicit user rating for a given user for the a given POI the user visited **45**

Done **46**

**Fig. 4**

**Fig. 5**

Europäisches
Patentamt

European
Patent Office

Office européen
des brevets

**EUROPEAN SEARCH REPORT**

Application Number

EP 15 30 5800

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff)<br><br>----- | | INV.<br>G06Q30/02 |

TECHNICAL FIELDS
SEARCHED (IPC)

G06Q

The present search report has been drawn up for all claims

| Place of search | Date of completion of the search | Examiner |
|---|---|---|
| The Hague | 30 October 2015 | Marcu, Antoniu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)